# EUROPÄISCHE PATENTSCHRIFT

(11) **EP 3 220 022 B1**
(45) Veröffentlichungstag und Bekanntmachung des Hinweises auf die Patenterteilung: **19.12.2018**
(21) Anmeldenummer: 17000272.9
(22) Anmeldetag: 21.02.2017
(51) Int. Cl.: F16K 5/06, G05D 7/01, F16K 47/08, E03C 1/02

(54) **DURCHFLUSSMENGENREGLER-EINHEIT**
FLOW QUANTITY CONTROLLER UNIT
UNITÉ DE RÉGULATION DE DÉBIT

(30) Priorität: 14.03.2016 DE 202016001631 U
(43) Veröffentlichungstag der Anmeldung: 20.09.2017
(73) Patentinhaber: Neoperl GmbH, 79379 Müllheim (DE)
(72) Erfinder: Twitchett, Simon, Hartlebury Kidderminster DY11 7XF (GB)
(74) Vertreter: Börjes-Pestalozza, Henrich

(56) Entgegenhaltungen:
- EP-A1- 1 616 999
- WO-A1-2008/067903
- DE-U1-202011 108 607

## Beschreibung

Die Erfindung betrifft eine Durchflussmengenregler-Einheit mit einem Einsetzgehäuse, in welchem Einsetzgehäuse wenigstens ein Durchflussmengenregler mit einem Regelkern vorgesehen ist, welcher Regelkern zwischen sich und einer den Regelkern umgebenden Umfangswandung einen Ringkanal umgrenzt, in welchem Ringkanal ein Drosselkörper aus elastischem Material vorgesehen ist, der zwischen sich und wenigstens einer, am Regelkern und zusätzlich oder stattdessen an der Umfangswandung vorgesehenen Regelprofilierung mindestens einen Regelspalt begrenzt, welcher Regelspalt unter dem Druck des durchströmenden Wassers veränderbar ist, wobei der Durchflussmengenregler-Einheit zumindest ein Einsetzteil in Strömungsrichtung vor- oder nachgeschaltet ist, welches zumindest eine Einsetzteil eine Gitter- oder Netzstruktur aus einander an Kreuzungsknoten kreuzenden Stegen aufweist, welche Stege zwischen sich Durchströmöffnungen umgrenzen.

Durchflussmengenregler-Einheiten sind in unterschiedlichen Ausführungen für verschiedene Anwendungen bereits bekannt. Solche Durchflussmengenregler-Einheiten sollen das durch eine Wasserleitung strömende Wasservolumen auf einen druckunabhängig festgelegten Maximalwert pro Zeiteinheit einregeln und begrenzen.

Aus der WO 2008/067903 A1 ist bereits eine sanitäre Einsetzeinheit vorbekannt, die ein Einsetzgehäuse hat, das an seinem Gehäuseaußenumfang einen Ringflansch aufweist. Das Einsetzgehäuse der vorbekannten Einsetzeinheit ist von der Zuströmseite aus in ein hülsenförmiges Auslaufmundstück einsetzbar, bis der außenumfangsseitig vorgesehene Ringflansch des Einsetzgehäuses auf einen Ringabsatz aufliegt, der am Hülseninnenumfang des Auslaufmundstücks vorgesehen ist. Die vorbekannte Einsetzeinheit, die mit Hilfe des Auslaufmundstücks am Wasserauslauf einer sanitären Auslaufarmatur montierbar ist, weist ein zuströmseitiges Vorsatzsieb und einen abströmseitig angeordneten Strahlregler auf, zwischen denen ein Durchflussmengenregler angeordnet ist, der mit seinem ringscheibenförmigen Reglergehäuse im Zwischenraum zwischen dem Vorsatzsieb und dem damit lösbar verbundenen Strahlregler untergebracht ist.

Aus der EP 1 616 999 A1 ist eine sanitäre Einsetzeinheit vorbekannt, die lediglich aus einem abströmseitigen Strahlregler sowie einem zuströmseitigen Vorsatzsieb besteht, und die ebenfalls mit Hilfe des hülsenförmigen Auslaufmundstücks am Wasserauslauf der sanitären Auslaufarmatur montierbar ist. Die vorbekannte Einsetzeinheit, die ohne einen Durchflussmengenregler zu verwenden ist, weist mehrere gitter- und netzförmige Einsetzteile auf, die in das Einsetzgehäuse des Strahlreglers einsetzbar sind und deren Gitter- oder Netzstruktur aus einander an Kreuzungsknoten kreuzenden Stegen gebildet sind. Diese Gitter- oder Netzstrukturen sollen das im Gehäuseinneren des Einsetzgehäuses zuvor mit Umgebungsluft durchsetzte Wasser wieder vergleichmäßigen und zu einem homogenen, nicht-spritzenden und perlend-weichen Auslaufstrahl formen, der an der abströmseitigen Gehäusestirnseite des Einsetzgehäuses austritt. Eine geräuschmindernde Wirkung ist mit den in das Einsetzgehäuse einsetzbaren Einsetzteilen nicht verbunden.

Aus der DE 20 2011 108 607 U1 kennt man eine ebenfalls am Wasserauslauf einer sanitären Auslaufarmatur montierbare sanitäre Einsetzeinheit, die auf der Zuströmseite ihres Einsetzgehäuses ein sich über den lichten Querschnitt erstreckendes Trägerteil aufweist, welches Trägerteil eine Mehrzahl voneinander beabstandeter Einsetzöffnungen hat. Die Einsetzöffnungen sind so voneinander beabstandet, dass die Durchflussmengenregler nicht beispielsweise koaxial ineinander angeordnet sind, sondern sich voneinander funktional getrennt ausgestalten lassen. Jeder der auf dem Trägerteil der vorbekannten Durchflussmengenregler-Einheit vorgesehenen Durchflussmengenregler weist einen kugelförmigen Drosselkörper aus elastischem Material auf, der zwischen sich und einer die Einsetzöffnung umgrenzenden Umfangswandung einen Steuerspalt begrenzt. Unter dem Druck des durchströmenden Fluids erfahren diese kugelförmigen Drosselkörper eine derartige Komprimierung in Durchflussrichtung, dass diese Komprimierung eine Umfangsweitung der Drosselkörper bewirkt, die den die Durchflussleistung der Durchflussmengenregler bestimmenden Steuerspalt verengt. Ein einziger ringförmiger Drosselkörper ist im Trägerteil der vorbekannten sanitären Einsetzeinheit demgegenüber nicht vorgesehen.

Um den funktionsgerechten Betrieb einer Heizung sicherzustellen, ist auch in der durch den sogenannten Hydroblock der Heizungssteuerung eines Warmwasserboilers führenden Wasserleitung üblicherweise ein Durchflussmengenregler vorgesehen. Während solche Hydroblöcke früher aus Messing waren, bestehen sie heute größtenteils aus Kunststoff. Kunststoff hat jedoch ein anderes Schwingungsverhalten wie Messing. Da die Durchflussmengenregler-Einheiten in einem bestimmten Druckbereich Resonanzen und Geräusche erzeugen, können diese Geräusche im Kunststoffblock nicht mehr abgefangen werden. Verantwortlich für diese Resonanzen sind Turbulenzen, die innerhalb der Bauteile, in dem sich die Durchflussmengenregler-Einheit befindet, entstehen. Die Verwendung einer Durchflussmengenregler-Einheit der eingangs erwähnten Art in dem heutzutage aus Kunststoff hergestellten Hydroblock der Heizungssteuerung führt zu einer unerwünschten, deutlich wahrnehmbaren Geräuschbildung.

Es besteht daher die Aufgabe, eine Durchflussmengenregler-Einheit der eingangs erwähnten Art zu schaffen, die sich durch eine deutlich reduzierte Geräuschbildung auszeichnet. Die erfindungsgemäße Lösung dieser Aufgabe besteht bei der Durchflussmengenregler-Einheit der eingangs erwähnten Art insbesondere darin, dass das Einsetzgehäuse mit Abstand vor einer Wasserentnahmestelle zwischen einem zuströmseitigen und einem abströmseitigen Leitungsabschnitt einer sanitären Wasserleitung angeordnet ist.

Die erfindungsgemäße Durchflussmengenregler-Einheit weist ein Einsetzgehäuse auf, das mit Abstand vor einer Wasserentnahmestelle zwischen einen zuströmseitigen und einen abströmseitigen Leitungsabschnitt einer sanitären Wasserleitung anordenbar ist. In dem Einsetzgehäuse der erfindungsgemäßen Durchflussmengenregler-Einheit ist wenigstens ein Durchflussmengenregler vorgesehen, der einen Regelkern hat, welcher Regelkern zwischen sich und einer den Regelkern umgebenden Umfangswandung einen Ringkanal umgrenzt. In diesem Ringkanal ist ein Drosselkörper aus elastischem Material vorgesehen, der zwischen sich und wenigstens einer, am Regelkern und zusätzlich oder stattdessen an der Umfangswandung vorgesehenen Regelprofilierung mindestens einen Regelspalt begrenzt. Unter dem Druck des durch den zumindest einen Regelspalt durchströmenden Fluids wird der elastische Drosselkörper mehr oder weniger in die Regelprofilierung verformt, so dass sich der Regelspalt mit wachsendem Wasserdruck zunehmend verengt, derart, dass das pro Zeiteinheit durchströmende Wasservolumen auf einen festgelegten Maximalwert begrenzt und eingeregelt wird. Durch diese Funktionsweise der Durchflussmengenregler-Einheit können jedoch in einem bestimmten Druckbereich Resonanzen und störende Geräusche entstehen. Um nun die erfindungsgemäße Durchflussmengenregler-Einheit mit einem Geräuschdämpfer auszustatten und um einer störenden Geräuschbildung selbst dann entgegenzuwirken, wenn die die Wasserleitung führende Funktionseinheit keine ausreichende Masse umfasst, um solche Geräusche abzufangen, ist erfindungsgemäß vorgesehen, dass der Durchflussmengenregler-Einheit zumindest ein Einsetzteil in Strömungsrichtung vor- öder nachgeschaltet ist, welches zumindest eine Einsetzteil jeweils eine Gitter- oder Netzstruktur aus einander an Kreuzungsknoten kreuzenden Stegen aufweist, welche Stege zwischen sich Durchströmöffnungen umgrenzen. Dieses zumindest eine Einsetzteil, das eine Gitter- oder Netzstruktur aufweist, bildet einen Strömungsgleichrichter, der geräuschbildenden Turbulenzen entgegenwirkt und zu einer Beruhigung des Wassers führt, wobei der Wasserdruck im Bereich dieser Einsetzteile kaum eine Minderung erfährt.

Die mit solchen Einsetzteilen erreichbare Strömungsgleichrichtung und -beruhigung lässt sich noch wesentlich begünstigen, wenn der Durchflussmengenregler-Einheit zumindest zwei Einsetzteile in Strömungsrichtung vor- oder nachgeschaltet sind, welche Einsetzteile jeweils eine Gitter- oder Netzstruktur aus einander an Kreuzungsknoten kreuzenden Stegen: aufweisen, welche Stege zwischen sich Durchströmöffnungen umgrenzen.

Um eine Beruhigung des durch die Wasserleitung strömenden Wassers noch zusätzlich zu begünstigen, ist es vorteilhaft, wenn der Durchflussmengenregler-Einheit mehr als zwei und vorzugsweise vier Einsetzteile in Strömungsrichtung vor- oder nachgeschaltet sind.

Die geräuschreduzierende und strömungsberuhigende Wirkung wird noch begünstigt, wenn die der Durchflussmengenregler-Einheit vor- oder nachgeschalteten Gitter- oder Netzstrukturen von zumindest zwei benachbarten Einsetzteilen voneinander beabstandet sind.

Besonders vorteilhaft ist es, wenn die Netzstruktur von zumindest zwei der Einsetzteile: durch radiale Stege gebildet ist, die sich an Kreuzungsknoten mit konzentrischen Stegen: kreuzen. Dabei können die radialen Stege eines jeden Einsetzteiles und die sich damit kreuzenden konzentrischen Stege in zwei parallelen Ebenen angeordnet sein, derart, dass die sich kreuzenden Stege an ihren einander zugewandten Stegseiten einstückig miteinander verbunden sind. Eine bevorzugte Ausführungsform der Erfindung, die sich durch eine reduzierte Einbaulänge auszeichnet, sieht demgegenüber jedoch vor, dass die sich kreuzenden Stege eines jeden Einsetzteiles in etwa einer Ebene angeordnet sind.

Die strömungsberuhigende und geräuschreduzierende Wirkung der Gitter- oder Netzstrukturen eines jeden Einsetzteiles wird noch dadurch begünstigt, wenn die Gitter- oder Netzstrukturen von zumindest: zwei, vorzugsweise benachbarten Einsetzteilen im Winkel zueinander angeordnet sind und wenn in der Flucht der Durchströmöffnungen des jeweils zuströmseitigen Einsetzteiles die Stege eines demgegenüber abströmseitigen Einsetzteiles angeordnet sind.

Um diese Orientierung der Gitter- oder Netzstrukturen benachbarter Einsetzteile zu sichern und festzulegen, ist es vorteilhaft, wenn zumindest zwei, vorzugsweise benachbarte Einsetzteile zueinander drehgesichert sind.

Damit die zueinander benachbarten Einsetzteile praktisch ein Paket von geringfügig beabstandeten Gitter- oder Netzstrukturen bilden, ist es zweckmäßig, wenn der Außenumfang der Einsetzteile jeweils durch: eine Ringwand gebildet ist und wenn die benachbarten Einsetzteile mit ihren Ringwänden aufeinanderliegend angeordnet sind.

Dabei sieht eine bevorzugte Ausführungsform gemäß der Erfindung vor, dass die Ringwände benachbarter Einsetzteile in ihrer axialen Längserstreckung so bemessen sind, dass deren Gitter- oder Netzstrukturen voneinander beabstandet angeordnet sind.

Damit die in definierten Positionen zueinander angeordneten Einsetzteile eine bestmögliche Geräuschdämpfung bewirken, ist es vorteilhaft, wenn die Einsetzteile der Durchflussmengenregler-Einheit in Abströmrichtung vorzugsweise unmittelbar nachgeschaltet sind.

Möglich ist es, dass die Durchflussmengenregler-Einheit in ein Eckventil integriert ist, während demgegenüber die ihr als Geräuschdämpfer zugeordneten Einsetzteile mit Abstand davon im weiteren Verlauf eines in Strömungsrichtung nachgeschalteten Leitungsabschnitts vorgesehen sind. Eine besonders einfache und leicht zu handhabende Ausführungsform gemäß der Erfindung sieht jedoch vor, dass die Einsetzteile in das Einsetzgehäuse der Durchflussmengenregler-Einheit eingesetzt sind.

Um die Orientierung der Gitter- oder Netzstrukturen der zueinander benachbarten Einsetzteile zu sichern und festzulegen, sieht eine besonders einfache Ausführungsform gemäß der Erfindung vor, dass zwischen zumindest zwei benachbarten Einsetzteile einerseits und dem Gehäuseinnenumfang des Einsetzgehäuses andererseits eine Drehsicherung vorgesehen ist.

Dabei kann als Drehsicherung an den benachbarten Einsetzteilen und insbesondere an deren Ringwand jeweils zumindest eine Aus- oder Einformung vorgesehen sein, die mit wenigstens einer Ein- oder Ausformung am Gehäuseinnenumfang des Einsetzgehäuses zusammenwirkt.

Die Gitter- oder Netzstrukturen der Einsetzteile bewirken eine größtmögliche Strömungsberuhigung und Geräuschminderung, wenn die Einsetzteile in Strömungsrichtung einander unmittelbar folgen.

Eine besonders vorteilhafte Ausführungsform gemäß der Erfindung sieht vor, dass das Einsetzgehäuse als Einsetzpatrone ausgebildet ist, die in eine vorzugsweise als Querschnittserweiterung des Leitungsquerschnitts ausgebildete Patronenaufnahme in der sanitären Wasserleitung einsetzbar ist.

Gemäß einer bevorzugten Anwendung der erfindungsgemäßen Durchflussmengenregler-Einheit ist vorgesehen, dass die sanitäre Wasserleitung und die in diese Wasserleitung zwischengeschaltete Durchflussmengenregler-Einheit im Hydroblock eine Heizungssteuerung angeordnet ist.

Damit die der Durchflussmengenregler-Einheit nachgeschalteten Gitter- oder Netzstrukturen geräuschbildende Turbulenzen im Wasserstrom reduzieren und den durchströmenden Wasserstrom gleichrichten können, ist es zweckmäßig, wenn die die Gitter- oder Netzstrukturen aufweisenden Einsetzteile in möglichst geringem Abstand vor oder vorzugsweise nach der Durchflussmengenregler-Einheit angeordnet sind. Eine bevorzugte Ausführungsform gemäß der Erfindung sieht daher vor, dass das wenigstens eine Einsetzteil in geringem Abstand zur Durchflussmengenregler-Einheit angeordnet ist und/oder dass der Abstand zwischen der Durchflussmengenregler-Einheit und dem zumindest einen benachbarten Einsetzteil kleiner oder gleich dem Doppelten des lichten Leitungsdurchmessers, vorzugsweise kleiner oder gleich dem lichten Leitungsdurchmesser und insbesondere kleiner oder gleich ein Viertel bis der Hälfte des lichten Leitungsdurchmessers ist.

Weiterbildungen gemäß der Erfindung ergeben sich aus der nachfolgenden Figurenbeschreibung in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: einen, in einem Teil-Längsschnitt gezeigten Hydro-block einer Heizungssteuerung, durch welchen Hydro-block eine Wasserleitung führt, in die eine Durchflussmengenregler-Einheit zwischengeschaltet ist,
- Fig. 2: den Hydroblock aus Figur 1 in einer längsgeschnittenen Detaildarstellung im Bereich der Durchflussmengenregler-Einheit,
- Fig. 3: die im Hydroblock gemäß den Figuren 1 und 2 verwendete Durchflussmengenregler-Einheit in einem Längsschnitt,
- Fig. 4: die Durchflussmengenregler-Einheit aus Figur 3 in einer Seitenansicht,
- Fig. 5: die Durchflussmengenregler-Einheit aus den Figuren 3 und 4 in einer auseinandergezogenen Perspektivdarstellung ihrer Bestandteile,
- Fig. 6: ein der Durchflussmengenregler-Einheit gemäß den Fig. 3 bis 5 zugeordnetes Einsetzteil mit einer den Außenumfang dieses Einsetzteiles bildenden Ringwand, in welcher Ringwand eine Netzstruktur aus einander an Kreuzungsknoten kreuzenden Stegen vorgesehen ist, die zwischen sich Durchströmöffnungen umgrenzen, und
- Fig. 7: ein zum Einsetzteil gemäß Fig. 6 benachbartes und in Strömungsrichtung vor- oder nachgeschaltetes Einsetzteil, das ebenfalls eine Netzstruktur aus Stegen hat, die in der Flucht der Durchströmöffnungen des in Fig. 6 gezeigten Einsetzteiles angeordnet sind.

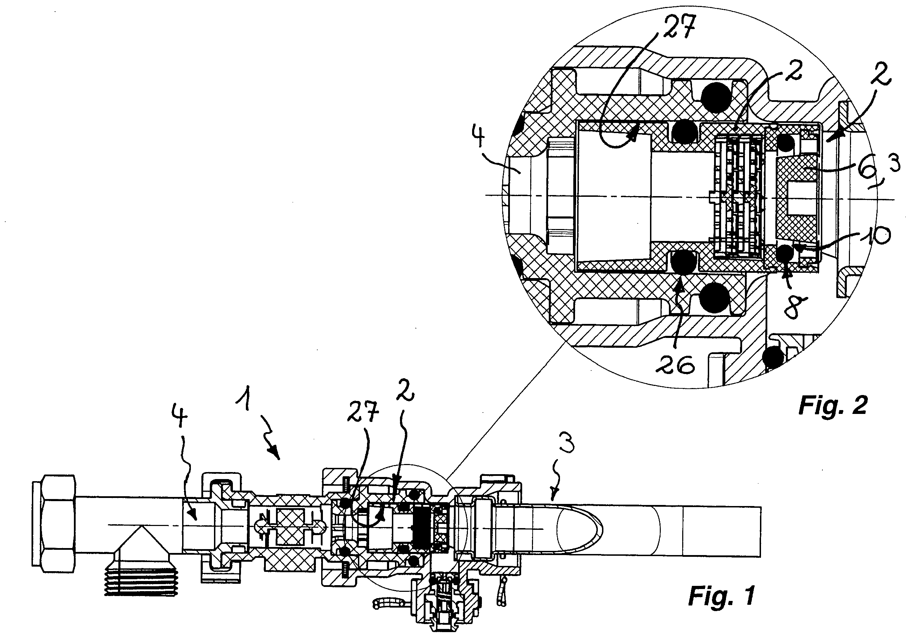

In den Figuren 1 und 2 ist ein Hydroblock 1 einer Heizungssteuerung dargestellt. Durch diesen Hydroblock 1 führt eine Wasserleitung, die eine zwischengeschaltete Durchflussmengenregler-Einheit 2 in einen zuströmseitigen Leitungsabschnitt 3 und einen abströmseitigen Leitungsabschnitt 4 teilt. Die Durchflussmengenregler-Einheit 2 weist ein Einsetzgehäuse 5 auf, das mit Abstand vor einer Wasserentnahmestelle zwischen den zuströmseitigen und den abströmseitigen Leitungsabschnitt 3, 4 der sanitären Wasserleitung zwischengeschaltet ist. In dem Einsetzgehäuse 5 der Durchflussmengenregler-Einheit 2 ist wenigstens ein Durchflussmengenregler vorgesehen, der einen Regelkern 6 hat, welcher Regelkern 6 zwischen sich und einer den Regelkern 6 umgebenden Umfangswandung 7 einen Ringkanal umgrenzt. In diesem Ringkanal ist ein Drosselkörper 8 aus elastischem Material vorgesehen, der zwischen sich und wenigstens einer, am Regelkern 6 und zusätzlich oder stattdessen an der Umfangwandung 7 vorgesehenen Regelprofilierung 9 mindestens einen Regelspalt 10 begrenzt. Unter dem Druck des durch den zumindest einen Regelspalt 10 durchströmenden Wassers wird der elastische Drosselkörper 8 mehr oder weniger in die Regelprofilierung 9 verformt, so dass sich der Regelspalt 10 mit wachsendem Wasserdruck zunehmend verengt, derart, dass das pro Zeiteinheit durchströmende Wasservolumen auf einen festgelegten Maximalwert begrenzt und eingeregelt wird. Durch diese Funktionsweise der Durchflussmengenregler-Einheit 2 können jedoch in einem bestimmten Druckbereich Resonanzen und störende Geräusche entstehen. Um nun die Durchflussmengenregler-Einheit 2 mit einem Geräuschdämpfer auszustatten und um einer störenden Geräuschbildung selbst dann entgegenzuwirken, wenn der die Wasserleitung führende Hydroblock 1 keine ausreichende Masse umfasst, um solche Geräusche abzufangen, ist vorgesehen, dass der Durchflussmengenregler-Einheit 2 zumindest zwei Einsetzteile 11, 12, 13 und 14 in Strömungsrichtung vor- oder nachgeschaltet sind, welche Einsetzteile 11, 12, 13, 14 jeweils eine Gitter- oder Netzstruktur 15 aus einander an Kreuzungsknoten 16 kreuzenden Stegen 17, 18 aufweisen, welche Stege 17, 18 zwischen sich Durchströmöffnungen 19 umgrenzen. Die Einsetzteile 11, 12, 13, 14, die hier jeweils eine Netzstruktur 15 haben, bilden einen Strömungsgleichrichter, der geräuschbildenden Turbulenzen entgegenwirkt und zu einer Beruhigung des Wassers führt, wobei der Wasserdruck im Bereich dieser Einsetzteile 11, 12, 13, 14 kaum eine Minderung erfährt. Dabei sind die Gitter- oder Netzstrukturen 15 von zumindest zwei benachbarten Einsetzteilen 11, 12, 13, 14 voneinander beabstandet. Der der Durchflussmengenregler-Einheit. 2 zugeordnete Geräuschdämpfer wird hier durch vier Einsetzteile 11, 12, 13, 14 gebildet, die jeweils eine Netzstruktur 15 haben, wobei diese Netzstrukturen 15 der Einsetzteile 11, 12, 13, 14 jeweils durch radiale Stege 17 gebildet sind,: die sich an den Kreuzungsknoten 16 mit den konzentrischen Stegen 18 kreuzen.

Insbesondere aus der auseinandergezogenen Perspektivdarstellung der einzelnen Bestandteile der Durchflussmengenregler-Einheit 2 wird deutlich, dass die Netzstrukturen der benachbarten Einsetzteile 11, 12, 13, 14 im Winkel zueinander angeordnet sind, und dass in der Flucht der Durchströmöffnungen 19 des jeweils zuströmseitigen Einsetzteiles 11, 12, 13, die Stege: 17, 18 eines demgegenüber abströmseitigen Einsetzteiles 12, 13, 14 angeordnet sind.

Das Einsetzgehäuse 5 der Durchflussmengenregler-Einheit 2 weist ein zuströmseitiges Gehäuseteil 20 sowie ein damit lösbar verrastbares abströmseitiges Gehäuseteil 21 auf. Während in das zuströmseitige Gehäuseteil 20 der Durchflussmengenregler mit seiner Umfangswandung 7 einsetzbar ist, können die Einsetzteile 11, 12, 13, 14 in den Hülseninnenraum des hülsenförmig ausgebildeten abströmseitigen Gehäuseteiles 21 eingelegt werden, bis das abströmseitig letzte Einsetzteil 14 auf einem Ringabsatz am Gehäuseinnenumfang des abströmseitigen Gehäuseteiles 21 aufliegt. Zwischen den in das Einsetzgehäuse 5 der Durchflussmengenregler-Einheit 2 eingesetzten Einsetzteile 11, 12, 13, 14 einerseits und dem Gehäuseinnenumfang des Einsetzgehäuses 5 andererseits ist eine Drehsicherung vorgesehen, welche die Orientierung der Netzstrukturen 15 der Einsetzteile 11, 12, 13, 14 zueinander sicherzustellen und festzulegen: hat. Dabei ist der Außenumfang der Einsetzteile 11, 12, 13, 14 jeweils durch eine Ringwand 22 gebildet, wobei als Drehsicherung an den Ringwänden 22 der benachbarten Einsetzteile 11, 12, 13, 14 jeweils zumindest eine Ausformung 23 vorgesehen ist, die in eine Einformung 24 am Gehäuseinnenumfang des Einsetzgehäuses 5 und insbesondere am Innenumfang seines abströmseitigen Gehäuseteiles 21 eingreift.

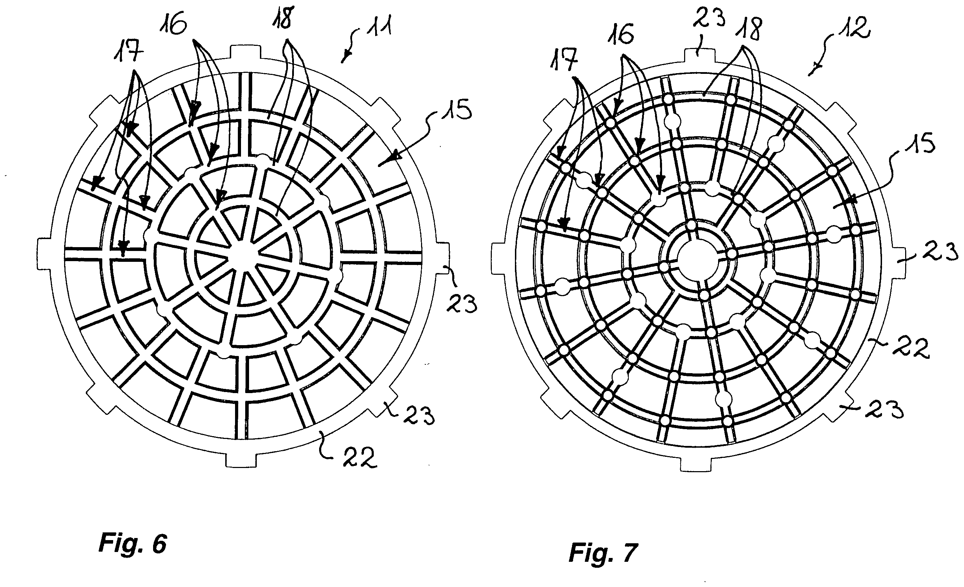

Von den Einsetzteilen 11, 12, 13, 14 sind in den Fig. 6 und 7 zwei benachbarte und in Strömungsrichtung einander nachfolgende Einsetzteile 11, 12 näher dargestellt. Die benachbarten Einsetzteile 11, 12 weisen jeweils eine Netzstruktur 15 auf, die aus einander an Kreuzungsknoten 16 kreuzenden Stegen 17, 18 gebildet sind. Dabei wird die Netzstruktur 15 dieser Einsetzteile 11, 12 durch radiale Stege 17 gebildet, die sich an den Kreuzungsknoten 16 mit den konzentrischen Stegen 18 kreuzen. Die Netzstrukturen 15 der in den Fig. 6 und 7 dargestellten benachbarten Einsetzteile 11, 12 sind im Winkel zueinander angeordnet, wobei in der Flucht der Durchströmöffnungen 19 des zustömseitigen Einsetzteiles 11 die Stege 17, 18 des demgegenüber abströmseitigen Einsetzteiles 12 angeordnet sind. Die Einsetzteile 11, 12 liegen mit ihren den Außenumfang dieser Einsetzteile 11, 12 bildenden Ringwänden 22, an denen die radialen Stege 17 einstückig angeformt sind, aufeinander auf, wobei die Ringwände 22 dieser benachbarten Einsetzteile 11, 12 in ihrer axialen Längserstreckung so bemessen sind, dass deren Netzstrukturen 15 voneinander beabstandet angeordnet sind. An den Ringwänden 22 auch der Einsetzteile 11, 12 sind die als Drehsicherung dienenden Ausformungen 23 vorgesehen, die jeweils in eine zugeordnete Einformung 24 am Gehäuseinnenumfang des Einsetzgehäuses 5 eingesetzt sind. An die in Fig. 6 und 7 dargestellten Einsetzteile 11, 12 schließen sich die weiteren Einsetzteile 13, 14 an, deren Stege 17, 18 ebenfalls im Winkel zueinander angeordnet sind. Dabei sind die Einsetzteile 11, 13 einerseits und 12, 14 andererseits paarweise übereinstimmend ausgebildet.

Aus den Fig. 1 und 2 ist erkennbar, dass die Einsetzteile 11, 12, 13, 14 in geringem Abstand zur Durchflussmengenregler-Einheit 2 angeordnet sind. Dieser Abstand zwischen der Durchflussmengenregler-Einheit 2 und dem in Strömungsrichtung nachfolgenden benachbarten Einsetzteil 11 sollte kleiner oder gleich dem Doppelten des lichten Leitungsdurchmessers, vorzugsweise kleiner oder gleich dem lichten Leitungsdurchmesser und insbesondere kleiner oder gleich ein Viertel bis der Hälfte des lichten Leitungsdurchmessers sein, damit die in diesen Einsetzteilen 11, 12, 13, 14 vorgesehenen Netzstrukturen 15 den von der Durchflussmengenregler-Einheit 2 kommenden Wasserstrom gut gleichrichten und geräuschbildende Turbulenzen wirkungsvoll vermindern können.

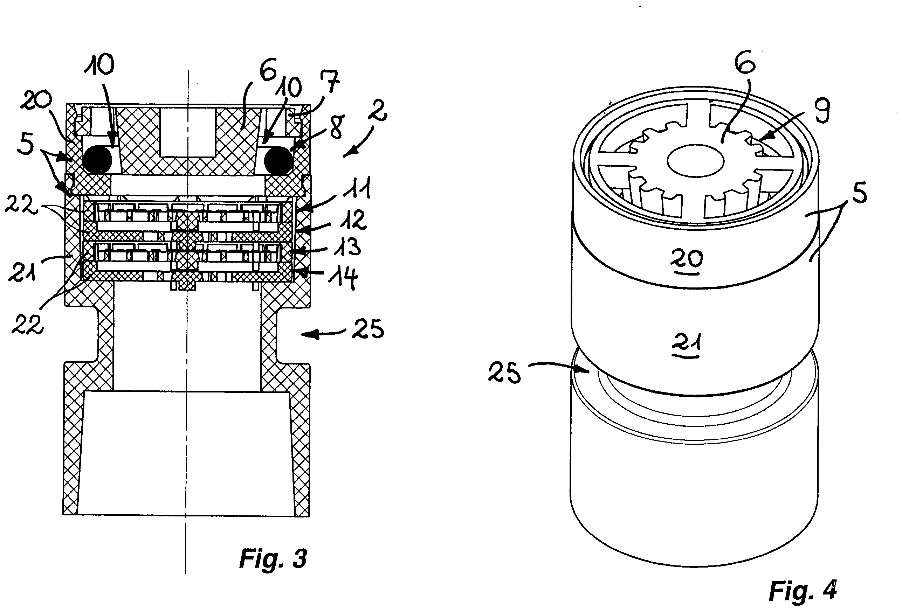

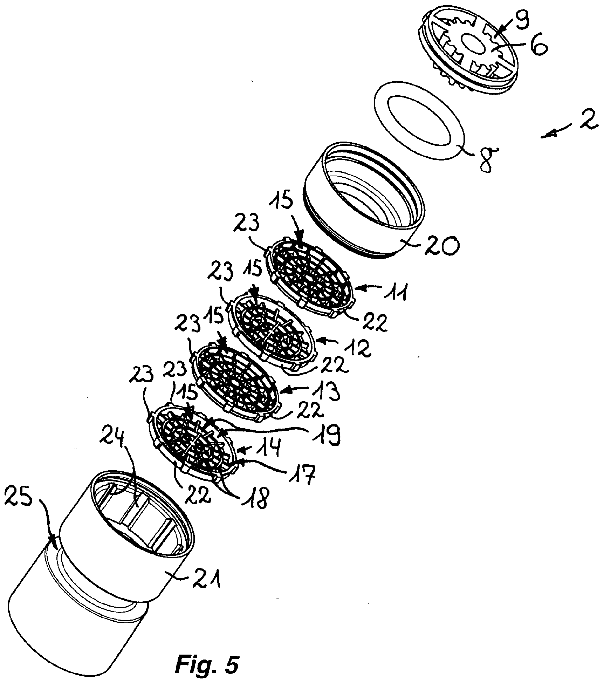

Aus den Figuren 3 bis 5 wird deutlich, dass das Einsetzgehäuse 5 hier als Einsetzpatrone ausgebildet ist, die in eine als Querschnittserweiterung des Leitungsquerschnitts ausgebildete Patronenaufnahme 27 in der sanitären Wasserleitung einsetzbar ist. Dabei ist das Einsetzgehäuse 5 gegenüber dem Leitungsinnenumfang vorzugsweise radial abgedichtet. Dazu ist am Gehäuseaußenumfang des Einsetzgehäuses 5 eine nutförmige Dichtring-Aufnahme 25 vorgesehen, in welche Dichtring-Aufnahme 25 ein Dichtring 26 aus elastischem Material eingelegt ist. Dieser Dichtring 26 dichtet den Ringspalt ab, der zwischen dem Gehäuseäußenumfang des Einsetzgehäuses 5 einerseits und dem Leitungsinnenumfang der sanitären Wasserleitung im Bereich ihrer Patronenaufnahme 27 andererseits verbleibt.

### Bezugszeichenliste

- 1: Hydroblock
- 2: Durchflussmengenregler-Einheit
- 3: zuströmseitiger Leitungsabschnitt
- 4: abströmseitiger Leitungsabschnitt
- 5: Einsetzgehäuse
- 6: Regelkern
- 7: Umfangswandung
- 8: Drosselkörper
- 9: Regelprofilierung
- 10: Regelspalt
- 11: (zuströmseitiges erstes) Einsetzteil
- 12: Einsetzteil
- 13: Einsetzteil
- 14: (abströmseitiges letztes) Einsetzteil
- 15: Netzstruktur
- 16: Kreuzungsknoten
- 17: (radiale) Stege
- 18: (konzentrische) Stege
- 19: Durchströmöffnungen
- 20: zuströmseitiges Gehäuseteil
- 21: abströmseitiges Gehäuseteil
- 22: Ringwände
- 23: Ausformungen
- 24: Einformungen
- 25: Dichtring-Aufnahme
- 26: Dichtring
- 27: Patronenaufnahme

## Patentansprüche

1. Durchflussmengenregler-Einheit (2) mit einem Einsetzgehäuse (5), in welchem Einsetzgehäuse (5) wenigstens ein Durchflussmengenregler mit einem Regelkern (6) vorgesehen ist, welcher Regelkern (6) zwischen sich und einer den Regelkern (6) umgebenden Umfangswandung (7) einen Ringkanal umgrenzt, in welchem Ringkanal ein Drosselkörper (8) aus elastischem Material vorgesehen ist, der (8) zwischen sich und wenigstens einer, am Regelkern (6) und zusätzlich oder stattdessen an der Umfangswandung (7) vorgesehenen Regelprofilierung (9) mindestens einen Regelspalt (10) begrenzt, welcher Regelspalt (10) unter dem Druck des durchströmenden Wassers veränderbar ist, wobei der Durchflussmengenregler-Einheit (2) zumindest ein Einsetzteil (11, 12, 13, 14) in Strömungsrichtung vor- oder nachgeschaltet ist, welches zumindest eine Einsetzteil (11, 12, 13, 14) eine Gitter- oder Netzstruktur (15) aus einander an Kreuzungsknoten (16) kreuzenden Stegen (17, 18) aufweist, welche Stege (17, 18) zwischen sich Durchströmöffnungen (19) umgrenzen, **dadurch gekennzeichnet, dass** das Einsetzgehäuse (5) mit Abstand vor einer Wasserentnahmestelle zwischen einem zuströmseitigen und einem abströmseitigen Leitungsabschnitt (3, 4) einer sanitären Wasserleitung angeordnet ist.

2. Durchflussmengenregler-Einheit nach Anspruch 1, **dadurch gekennzeichnet, dass** der Durchflussmengenregler-Einheit (2) zumindest zwei Einsetzteile (11, 12, 13, 14) in Strömungsrichtung vor- oder nachgeschaltet sind, welche Einsetzteile (11, 12, 13, 14) jeweils eine Gitter- oder Netzstruktur (15) aus einander an Kreuzungsknoten (16) kreuzenden Stegen (17, 18) aufweisen, welche Stege (17, 18) zwischen sich Durchströmöffnungen (19) umgrenzen.

3. Durchflussmengenregler-Einheit nach Anspruch 1 oder 2, **dadurch gekennzeichnet, dass** der Durchflussmengenregler-Einheit (2) mehr als zwei und vorzugsweise vier Einsetzteile (11, 12, 13, 14) in Strömungsrichtung vor- oder nachgeschaltet sind.

4. Durchflussmengenregler-Einheit nach einem der Ansprüche 1 bis 3, **dadurch gekennzeichnet, dass** die der Durchflussmengenregler-Einheit (2) vor- oder nachgeschalteten Gitter- oder Netzstrukturen (15) von zumindest zwei benachbarten Einsetzteilen (11, 12, 13, 14) voneinander beabstandet sind.

5. Durchflussmengenregler-Einheit nach einem der Ansprüche 1 bis 4, **dadurch gekennzeichnet, dass** die Netzstruktur (15) von zumindest zwei der Einsetzteile (11, 12, 13, 14) durch radiale Stege (17) gebildet ist, die sich an Kreuzungsknoten (16) mit konzentrischen Stegen (18) kreuzen.

6. Durchflussmengenregler-Einheit nach einem der Ansprüche 1 bis 5, **dadurch gekennzeichnet, dass** die Gitter- oder Netzstrukturen von zumindest zwei, vorzugsweise benachbarten Einsetzteilen (11, 12, 13, 14) im Winkel zueinander angeordnet sind und dass in der Flucht der Durchströmöffnungen (19) des zuströmseitigen Einsetzteiles (11, 12, 13) die Stege (17, 18) eines demgegenüber abströmseitigen Einsetzteiles (12, 13, 14) angeordnet sind.

7. Durchflussmengenregler-Einheit nach einem der Ansprüche 1 bis 6, **dadurch gekennzeichnet, dass** zumindest zwei, vorzugsweise benachbarte Einsetzteile (11, 12, 13, 14) zueinander drehgesichert sind.

8. Durchflussmengenregler-Einheit nach einem der Ansprüche 1 bis 7, **dadurch gekennzeichnet, dass** der Außenumfang der Einsetzteile (11, 12, 13, 14) jeweils durch eine Ringwand (22) gebildet ist und dass die benachbarten Einsetzteile (11, 12, 13, 14) mit ihren Ringwänden (22) aufeinanderliegend angeordnet sind.

9. Durchflussmengenregler-Einheit nach einem der Ansprüche 1 bis 8, **dadurch gekennzeichnet, dass** die Ringwände (22) benachbarter Einsetzteile (11, 12, 13, 14) in ihrer axialen Längserstreckung so bemessen sind, dass deren Gitter- oder Netzstrukturen (15) voneinander beabstandet angeordnet sind.

10. Durchflussmengenregler-Einheit nach einem der Ansprüche 1 bis 9, **dadurch gekennzeichnet, dass** die Einsetzteile (11, 12, 13, 14) der Durchflussmengenregler-Einheit (2) in Abströmrichtung einander vorzugsweise unmittelbar nachgeschaltet sind.

11. Durchflussmengenregler-Einheit nach einem der Ansprüche 1 bis 10, **dadurch gekennzeichnet, dass** die Einsetzteile (11, 12, 13, 14) in das Einsetzgehäuse (5) der Durchflussmengenregler-Einheit (2) eingesetzt sind.

12. Durchflussmengenregler-Einheit nach einem der Ansprüche 1 bis 11, **dadurch gekennzeichnet, dass** zwischen zumindest zwei benachbarten Einsetzteilen (11, 12, 13, 14) einerseits und dem Gehäuseinnenumfang des Einsetzgehäuses (5) andererseits eine Drehsicherung vorgesehen ist.

13. Durchflussmengenregler-Einheit nach Anspruch 12, **dadurch gekennzeichnet, dass** als Drehsicherung an den benachbarten Einsetzteilen (11, 12, 13, 14) und insbesondere an deren Ringwand (22) jeweils zumindest eine Ein- oder Ausformung (23) vorgesehen ist, die (23) mit wenigstens einer Aus- oder Einformung (24) am Gehäuseinnenumfang des Einsetzgehäuses (5) zusammenwirkt.

14. Durchflussmengenregler-Einheit nach einem der Ansprüche 1 bis 13, **dadurch gekennzeichnet, dass** die Einsetzteile (11, 12, 13, 14) in Strömungsrichtung einander unmittelbar folgen.

15. Durchflussmengenregler-Einheit nach einem der Ansprüche 1 bis 14, **dadurch gekennzeichnet, dass** das Einsetzgehäuse (5) als Einsetzpatrone ausgebildet ist, die in eine vorzugsweise als Querschnittserweiterung des Leitungsquerschnitts ausgebildete Patronenaufnahme (27) in der sanitären Wasserleitung einsetzbar ist.

16. Durchflussmengenregler-Einheit nach einem der Ansprüche 1 bis 15, **dadurch gekennzeichnet, dass** die sanitäre Wasserleitung und die in diese Wasserleitung zwischengeschaltete Durchflussmengenregler-Einheit (2) im Hydroblock (1) einer Heizungssteuerung angeordnet ist.

17. Durchflussmengenregler-Einheit nach einem der Ansprüche 1 bis 16, **dadurch gekennzeichnet, dass** das wenigstens eine Einsetzteil (11, 12, 13, 14) in geringem Abstand zur Durchflussmengenregler-Einheit (2) angeordnet ist und/oder dass der Abstand zwischen der Durchflussmengenregler-Einheit (2) und dem benachbarten, zumindest einen Einsetzteil (11, 12, 13, 14) kleiner oder gleich dem Doppelten des lichten Leitungsdurchmessers, vorzugsweise kleiner oder gleich dem lichten Leitungsdurchmesser und insbesondere kleiner oder gleich einem Viertel bis der Hälfte des lichten Leitungsdurchmessers ist.

## Claims

1. Flow-rate regulator unit (2) having an insert housing (5), in which insert housing (5) at least one flow-rate regulator having a regulating core (6) is provided, which regulating core (6) defines an annular duct between itself and a peripheral wall (7) surrounding the regulating core (6), in which annular duct a throttle body (8) consisting of elastic material is provided, which throttle body (8) delimits at least one regulating gap (10) between itself and at least one regulating profiling (9) provided on the regulating core (6) and, in addition or instead, on the peripheral wall (7), which regulating gap (10) can be changed under the pressure of the throughflowing water, wherein at least one insert part (11, 12, 13, 14) is arranged upstream or downstream of the flow-rate regulator unit (2) in the flow direction, which at last one insert part (11, 12, 13, 14) has a lattice or grid structure (15) consisting of webs (17, 18) which cross one another at crossing nodes (16), which webs (17, 18) define throughflow openings (19) between themselves, **characterized in that** the insert housing (5) is arranged at a distance ahead of a water-removal point between an inflow-side and an outflow-side line portion (3, 4) of a sanitary water line.

2. Flow-rate regulator unit according to Claim 1, **characterized in that** at least two insert parts (11, 12, 13, 14) are arranged upstream or downstream of the flow-rate regulator unit (2) in the flow direction, which insert parts (11, 12, 13, 14) each have a lattice or grid structure (15) consisting of webs (17, 18) which cross one another at crossing nodes (16), which webs (17, 18) define throughflow openings (19) between themselves.

3. Flow-rate regulator unit according to Claim 1 or 2, **characterized in that** more than two, and preferably four, insert parts (11, 12, 13, 14) are arranged upstream or downstream of the flow-rate regulator unit (2) in the flow direction.

4. Flow-rate regulator unit according to one of Claims 1 to 3, **characterized in that** the lattice or grid structures (15), which are arranged upstream or downstream of the flow-rate regulator unit (2), of at least two adjacent insert parts (11, 12, 13, 14) are spaced apart from one another.

5. Flow-rate regulator unit according to one of Claims 1 to 4, **characterized in that** the grid structure (15) of at least two of the insert parts (11, 12, 13, 14) is formed by radial webs (17) which cross with concentric webs (18) at crossing nodes (16).

6. Flow-rate regulator unit according to one of Claims 1 to 5, **characterized in that** the lattice or grid structures of at least two, preferably adjacent insert parts (11, 12, 13, 14) are arranged at an angle to one another, and **in that** the throughflow openings (19) of the inflow-side insert parts (11, 12, 13) are arranged in alignment with the webs (17, 18) of an insert part (12, 13, 14) which is on the outflow side relative thereto.

7. Flow-rate regulator unit according to one of Claims 1 to 6, **characterized in that** at least two, preferably adjacent insert parts (11, 12, 13, 14) are rotationally secured with respect to one another.

8. Flow-rate regulator unit according to one of Claims 1 to 7, **characterized in that** the outer periphery of the insert parts (11, 12, 13, 14) is formed in each case by an annular wall (22), and **in that** the adjacent insert parts (11, 12, 13, 14) are arranged with their annular walls (22) lying on one another.

9. Flow-rate regulator unit according to one of Claims 1 to 8, **characterized in that** the annular walls (22) of adjacent insert parts (11, 12, 13, 14) are dimensioned in their axial longitudinal extent such that the lattice or grid structures (15) thereof are arranged spaced apart from one another.

10. Flow-rate regulator unit according to one of Claims 1 to 9, **characterized in that** the insert parts (11, 12, 13, 14) of the flow-rate regulator unit (2) are preferably arranged directly downstream of one another in the outflow direction.

11. Flow-rate regulator unit according to one of Claims 1 to 10, **characterized in that** the insert parts (11, 12, 13, 14) are inserted into the insert housing (5) of the flow-rate regulator unit (2) .

12. Flow-rate regulator unit according to one of Claims 1 to 11, **characterized in that** an anti-rotation safeguard is provided between at least two adjacent insert parts (11, 12, 13, 14) on the one hand and the housing inner periphery of the insert housing (5) on the other hand.

13. Flow-rate regulator unit according to Claim 12, **characterized in that** in each case at least one recess or projection (23) is provided as anti-rotation safeguard on the adjacent insert parts (11, 12, 13, 14) and in particular on the annular wall (22) thereof, which recess or projection (23) interacts with at least one projection or recess (24) on the housing inner periphery of the insert housing (5).

14. Flow-rate regulator unit according to one of Claims 1 to 13, **characterized in that** the insert parts (11, 12, 13, 14) directly follow one another in the flow direction.

15. Flow-rate regulator unit according to one of Claims 1 to 14, **characterized in that** the insert housing (5) is designed as an insert cartridge which can be inserted into a cartridge receptacle (27) in the sanitary water line, which cartridge is preferably designed as a cross-sectional widening of the line cross section.

16. Flow-rate regulator unit according to one of Claims 1 to 15, **characterized in that** the sanitary water line and the flow-rate regulator unit (2) interposed in this water line are arranged in the hydraulic block (1) of a heating control system.

17. Flow-rate regulator unit according to one of Claims 1 to 16, **characterized in that** the at least one insert part (11, 12, 13, 14) is arranged at a slight distance from the flow-rate regulator unit (2), and/or **in that** the distance between the flow-rate regulator unit (2) and the adjacent, at least one insert part (11, 12, 13, 14) is less than or equal to double the clear line diameter, preferably less than or equal to the clear line diameter, and in particular less than or equal to a quarter to a half of the clear line diameter.

## Revendications

1. Unité de régulation de débit (2) avec un boîtier à insérer (5), boîtier à insérer (5) dans lequel il est prévu au moins un régulateur de débit avec un noyau de régulation (6), noyau de régulation (6) qui délimite un canal annulaire entre lui-même et une paroi périphérique (7) entourant le noyau de régulation (6), canal annulaire dans lequel il est prévu un corps d'étranglement (8) en matériau élastique, qui (8) limite entre lui-même et au moins un profilage de régulation (9) prévu sur le noyau de régulation (6) et en plus ou au lieu de la paroi périphérique (7) au moins une fente de régulation (10), fente de régulation (10) qui peut varier sous la pression de l'eau en écoulement, dans laquelle au moins une pièce d'insertion (11, 12, 13, 14) est placée avant ou après l'unité de régulation de débit (2) dans la direction d'écoulement, ladite au moins une pièce d'insertion (11, 12, 13, 14) présentant une structure de grille ou de tamis (15) composée de nervures (17, 18) qui se croisent mutuellement à des noeuds de croisement (16), lesdites nervures (17, 18) délimitant entre des ouvertures d'écoulement (19) **caractérisée en ce que** le boîtier à insérer (5) est disposé à distance avant un point de prélèvement d'eau entre une section de conduite amont et une section de conduite aval (3, 4) d'une conduite d'eau sanitaire.

2. Unité de régulation de débit selon la revendication 1, **caractérisée en ce qu'**au moins deux pièces d'insertion (11, 12, 13, 14) sont placées avant ou après l'unité de régulation de débit (2) dans la direction d'écoulement, pièces d'insertion (11, 12, 13, 14) qui présentent chacune une structure de grille ou de tamis (15) composée de nervures (17, 18) qui se croisent mutuellement à des noeuds de croisement (16), nervures (17, 18) qui délimitent entre elles des ouvertures d'écoulement.

3. Unité de régulation de débit selon la revendication 1 ou 2, **caractérisée en ce que** plus de deux et de préférence quatre pièces d'insertion (11, 12, 13, 14) sont placées avant ou après l'unité de régulation de débit (2) dans la direction d'écoulement.

4. Unité de régulation de débit selon l'une quelconque des revendications 1 à 3, **caractérisée en ce que** les structures de grille ou de tamis (15) d'au moins deux pièces d'insertion voisines (11, 12, 13, 14) placées avant ou après l'unité de régulation de débit (2) sont espacées l'une de l'autre.

5. Unité de régulation de débit selon l'une quelconque des revendications 1 à 4, **caractérisée en ce que** la structure de tamis (15) d'au moins deux des pièces d'insertion (11, 12, 13, 14) est formée par des nervures radiales (17), qui croisent des nervures concentriques (18) à des noeuds de croisement (16).

6. Unité de régulation de débit selon l'une quelconque des revendications 1 à 5, **caractérisée en ce que** les structures de grille ou de tamis d'au moins deux pièces d'insertion de préférence voisines (11, 12, 13, 14) sont disposées sous un angle l'une par rapport à l'autre et **en ce que** les nervures (17, 18) d'une pièce d'insertion placée en aval (12, 13, 14) sont disposées dans l'alignement des ouvertures d'écoulement (19) de la pièce d'insertion placée en amont (11, 12, 13) par rapport à celle-ci.

7. Unité de régulation de débit selon l'une quelconque des revendications 1 à 6, **caractérisée en ce qu'**au moins deux pièces d'insertion (11, 12, 13, 14) de préférence voisines sont calées en rotation l'une par rapport à l'autre.

8. Unité de régulation de débit selon l'une quelconque des revendications 1 à 7, **caractérisée en ce que** la périphérie extérieure des pièces d'insertion (11, 12, 13, 14) est formée respectivement par une paroi annulaire (22) et **en ce que** les pièces d'insertion voisines (11, 12, 13, 14) sont disposées de façon superposée avec leurs parois annulaires (22).

9. Unité de régulation de débit selon l'une quelconque des revendications 1 à 8, **caractérisée en ce que** les parois annulaires (22) de pièces d'insertion voisines (11, 12, 13, 14) sont dimensionnées, en ce qui concerne leur extension longitudinale axiale, de telle manière que leurs structures de grille ou de tamis (15) soient disposées à distance l'une de l'autre.

10. Unité de régulation de débit selon l'une quelconque des revendications 1 à 9, **caractérisée en ce que** les pièces d'insertion (11, 12, 13, 14) de l'unité de régulation de débit (2) sont disposées directement l'une après l'autre dans la direction d'écoulement.

11. Unité de régulation de débit selon l'une quelconque des revendications 1 à 10, **caractérisée en ce que** les pièces d'insertion (11, 12, 13, 14) sont insérées dans le boîtier à insérer (5) de l'unité de régulation de débit (2).

12. Unité de régulation de débit selon l'une quelconque des revendications 1 à 11, **caractérisée en ce qu'**il est prévu un blocage de rotation entre au moins deux pièces d'insertion voisines (11, 12, 13, 14) d'une part et la périphérie intérieure de boîtier du boîtier à insérer (5) d'autre part.

13. Unité de régulation de débit selon la revendication 12, **caractérisée en ce qu'**il est prévu comme blocage de rotation sur les pièces d'insertion voisines (11, 12, 13, 14) et en particulier sur leur paroi annulaire (22) chaque fois au moins un creux ou une saillie (23), qui (23) coopère avec au moins un creux ou une saillie (24) sur la périphérie intérieure de boîtier du boîtier à insérer (5).

14. Unité de régulation de débit selon l'une quelconque des revendications 1 à 13, **caractérisée en ce que** les pièces d'insertion (11, 12, 13, 14) se suivent directement dans la direction d'écoulement.

15. Unité de régulation de débit selon l'une quelconque des revendications 1 à 14, **caractérisée en ce que** le boîtier à insérer (5) est réalisé sous forme de cartouche à insérer, qui peut être insérée dans un logement de cartouche (27) réalisé de préférence sous la forme d'un élargissement de section transversale de la section transversale de la conduite dans la conduite d'eau sanitaire.

16. Unité de régulation de débit selon l'une quelconque des revendications 1 à 15, **caractérisée en ce que** la conduite d'eau sanitaire et l'unité de régulation de débit (2) intercalée dans cette conduite d'eau est disposée dans le bloc hydraulique (1) d'une commande de chauffage.

17. Unité de régulation de débit selon l'une quelconque des revendications 1 à 16, **caractérisée en ce que** ladite au moins une pièce d'insertion (11, 12, 13, 14) est disposée à faible distance de l'unité de régulation de débit (2) et/ou **en ce que** la distance entre l'unité de régulation de débit (2) et ladite au moins une pièce d'insertion voisine (11, 12, 13, 14) est inférieure ou égale au double du diamètre libre de la conduite, de préférence inférieure ou égale au diamètre libre de la conduite et en particulier inférieure ou égale à une valeur allant du quart à la moitié du diamètre de la conduite.
